# EUROPÄISCHE PATENTSCHRIFT

(11) **EP 1 182 095 B1**
(45) Veröffentlichungstag und Bekanntmachung des Hinweises auf die Patenterteilung: **21.05.2003**
(21) Anmeldenummer: 00117134.7
(22) Anmeldetag: 10.08.2000
(51) Int. Cl.: B60R 19/18

(54) **Zweischalig gebildeter Träger mit offenem Profil für einen Stossfänger**
Open-profile beam composed of two shells for a bumper
Poutre à profil ouvert constituée de deux coquilles pour pare-chocs

(43) Veröffentlichungstag der Anmeldung: 27.02.2002
(73) Patentinhaber: BENTELER AG, D-33104 Paderborn (DE)
(72) Erfinder: Dr. Kröning, Achim, 33102 Paderborn (DE); Dr. Wang, Hui, 33102 Paderborn (DE); Goer, Peter, 33100 Paderborn (DE); Straznikiewiecz, Dariusz, 33102 Paderborn (DE)
(74) Vertreter: Ksoll, Peter, Dr.-Ing.

(56) Entgegenhaltungen:
- EP-A- 0 894 675
- DE-A- 2 734 898
- GB-A- 1 497 438
- US-A- 5 290 078

## Beschreibung

Die Erfindung betrifft einen Stoßfänger für ein Kraftfahrzeug gemäß den Merkmalen im Oberbegriff von Anspruch 1. Ein derartiger staßfänger ist aus der GB-A-1 497 438 bekannt.

Stoßfänger sind quer an Front und Heck eines Kraftfahrzeugs zwischen der die Karosserie abschließenden Kunststoffverschalung und dem Rahmen des Kraftfahrzeugs angeordnet. Sie sollen dazu beitragen, dass die Fahrzeugstruktur bei einem Anprall mit geringer Geschwindigkeit keine Beschädigung davonträgt. Hierzu sind zwischen den Querträger und die Längsträger Pralldämpfer, sogenannte Crashboxen, geschaltet. Die Pralldämpfer sollen die aus einem Anprall resultierende Energie absorbieren, indem diese in Verformungsarbeit umgewandelt wird.

Unterschiedlichste Stoßfänger bzw. Stoßfängeranordnungen sind bekannt. So zählt durch die DE 197 00 022 A1 eine Stoßfängeranordnung zum Stand der Technik mit einem starren, teilweise als Hohlträger ausgebildeten Träger, der beiderseits der Fahrzeuglängsmitte jeweils mittels Pralldämpfern an den vorderen Enden der Karosserielängsträger befestigt ist. Der Träger ist mit einer deformierbaren Stoßfängerschale verbunden.

Gleichartige Vorschläge gehen aus der GB 2 328 654 A oder der EP 0 050 722 A1 hervor.

Speziell beim hinteren Stoßfänger ist der freie Deformationsweg, der zur Energieaufnahme zur Verfügung steht, bedingt durch die Fahrzeugkonstruktion kurz, weil der zur Verfügung stehende Bauraum durch die Kofferraumabdeckung begrenzt ist. Man ist daher bestrebt, dass der Querträger bereits als eine Art vorgeschaltetes Deformationselement mit den Crashboxen eine Reihenschaltung bildet, um die Energieaufnahme von Beginn an so hoch wie möglich ausfallen zu lassen. Solche Systeme bestehen meistens aus einem Querträger, der als geschlossenes Hohlkammerprofil oder als geschlossenes Pressschalenteil ausgeführt ist, wie auch die oben zitierten Veröffentlichungen zeigen. Das Gewicht einer solche Konstruktion ist wegen des Materialeinsatzes hoch. Auch die Lackierung bzw. der Oberflächenschutz des Querträgers ist wegen der geschlossenen Bauweise aufwendig.

Der Erfindung liegt ausgehend vom Stand der Technik die Aufgabe zugrunde, einen Stoßfänger in gewichtsreduzierter Bauweise zu verbessern, wobei der Querträger ein Deformationsvermögen aufweist und im Zusammenwirken mit den Crashboxen zur Energieabsorption bei einem Anprallvorgang beiträgt.

Die Lösung dieser Aufgabe besteht nach der Erfindung in einem Stoßfänger gemäß den Merkmalen von Anspruch 1.

Vorteilhafte Ausgestaltungen des grundsätzlichen Erfindungsgedankens sind in den abhängigen Ansprüchen 2 bis 5 charakterisiert.

Erfindungsgemäß ist der Querträger als zu den Pralldämpfern hin offenes Profil aus einer Oberschale und einer Unterschale gebildet. Vom frontseitigen Steg des Querträgers erstreckt sich jeweils an der oberen bzw. unteren Längskante ein nach hinten gerichteter Schenkel. Dieser ist als Deformationsfalte ausgebildet mit einem Vertikalabschnitt, an den sich ein zum Rahmen des Kraftfahrzeugs hin abgewinkelter Versteifungsflansch anschließt. Vorzugsweise ist der Vertikalabschnitt bezogen auf das offene Profil nach innen eingezogen und der Versteifungsflansch etwa rechtwinklig zum Vertikalabschnitt ausgerichtet.

Durch das offene Querträgerprofil wird eine erhebliche Gewichtsreduzierung erreicht. Zudem kann Material eingespart werden. Die Formgebung des zweischaligen Querträgers mit Falten- und Flanschausbildung verleiht diesem ein Deformationsverhalten, vergleichbar mit einem Pralldämpfer.

In vorteilhafter Weise sind die Oberschale und die Unterschale bezogen auf die Mittellängsebene symmetrisch zueinander angeordnet. Oberschale und Unterschale können dann als gleiche Bauteile mit identischer Querschnittskonfiguration ausgeführt werden. Hierdurch werden Werkzeugkosten eingespart. Die beschnittoptimierte Gestaltung des Profils trägt zudem zu einer besseren Werkstoffausnutzung bei.

Am zusammengesetzten Querträger überlappt die Oberschale die Unterschale bereichsweise und wird mit dieser gefügt, vorzugsweise geschweißt.

In den Querträger sind Aufnahmen zur Anbindung der Pralldämpfer integriert. Die Aufnahmen sind taschenartig gestaltet und werden beim Pressvorgang in die Ober- bzw. die Unterschale eingebracht. Die Schalengestaltung kann hierbei an unterschiedliche Pralldämpferkonfigurationen angepasst werden.

In diesem Zusammenhang wird ein Querträger als vorteilhaft angesehen, dessen Aufnahmen zur Oberseite und zur Unterseite der Pralldämpfer parallele Längenabschnitte aufweist, welche mit einem kontinuierlichen Übergang in die Längsschenkel übergehen. Die Aufnahmen sind durch partielle Aufweitungen an den Schenkeln von Oberschale und Unterschale ausgebildet. Am fertigen Stoßfänger nehmen die Aufnahmen die Endabschnitte der Pralldämpfer formschlüssig auf.

Zweckmäßigerweise sind auch die Pralldämpfer zweischalig aus Ober- und Unterschale gebildet. Die Oberschale und die Unterschale sind an den Längskanten ihrer Seitenschenkel gefügt. Zum Querträger hin sind die Pralldämpfer offen. Längsträgerseitig besitzen sie einen Anschlussflansch zur Anbindung an die Längsträger.

Die Erfindung ist nachfolgend anhand eines in den Zeichnungen dargestellten Ausführungsbeispiels näher beschrieben. Es zeigen:
- Figur 1: in perspektivischer Darstellungsweise einen Stoßfänger;
- Figur 2: den Stoßfänger in der Rückansicht;
- Figur 3: einen Ausschnitt des Stoßfängers mit der Darstellung des Anbindungsbereichs von Querträger und Pralldämpfer und
- Figur 4: in technisch vereinfachter Darstellungsweise einen Querschnitt durch den Querträger.

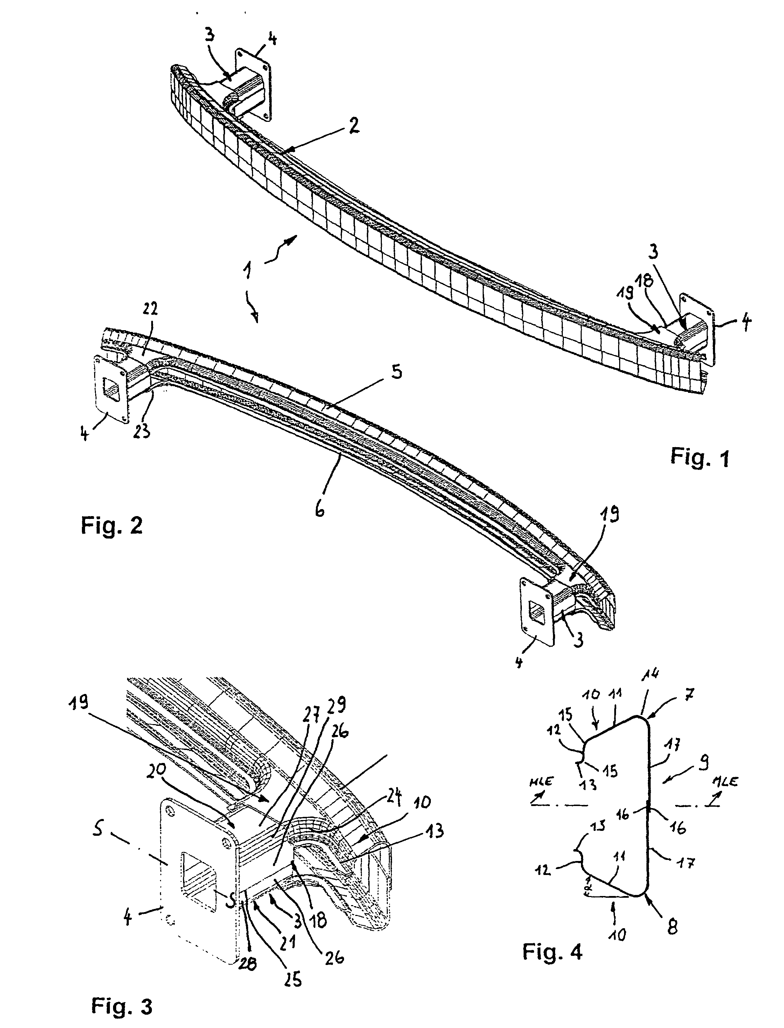

In den Figuren 1 und 2 ist mit 1 ein Stoßfänger für ein Kraftfahrzeug bezeichnet. Dieser umfasst einen quer zu den hier nicht dargestellten Längsträgern des Kraftfahrzeugrahmens festlegbaren Querträger 2. Zwischen den Längsträgern und dem Querträger 2 sind Pralldämpfer 3 als Energie absorbierende Deformationselemente eingegliedert. Zur Anbindung an die Längsträger besitzen die Pralldämpfer 3 rückseitige Flanschplatten 4.

Der Querträger 2 weist über den wesentlichsten Teil seiner Länge ein zu den Pralldämpfern 3 hin offenes Profil auf. Er ist als Schalenkonstruktion aus einer dünnwandigen metallischen Oberschale 5 und einer ebensolchen Unterschale 6 gebildet. An die obere Längskante 7 und an die untere Längskante 8 des frontseitigen Stegs 9 des Querträgers 2 schließt sich jeweils ein nach hinten gerichteter Schenkel 10 an. Dieser ist als Deformationsfalte ausgebildet und charakterisiert sich durch jeweils einen schräg verlaufenden Längenabschnitt 11, an den sich ein im wesentlichen vertikal ausgerichteter Vertikalabschnitt 12 anschließt, der endseitig in einen zum Rahmen hin etwa rechtwinklig abgewinkelten Versteifungsflansch 13 übergeht. Man erkennt, dass die Längenabschnitte 11 nach innen zur Mittellängsebene MLE hin eingezogen sind. Der Neigungswinkel α kann zwischen 5° und 45° betragen, vorzugsweise liegt er zwischen 10° und 35°. In dem hier dargestellten Ausführungsbeispiel ist der Winkel α = 25° (siehe hierzu Figur 4). Die Übergänge 14 bzw. 15 verlaufen jeweils gerundet.

Die Oberschale 5 und die Unterschale 6 sind querschnittsmäßig gleich konfiguriert. Es handelt sich um gleiche Bauteile, die in einem Werkzeug abgepresst werden. Dies trägt zu einer rationellen Bauweise bei. Zudem können Werkzeugkosten eingespart werden. Die Oberschale 5 und die Unterschale 6 werden gegengleich angeordnet und entlang der sich überlappenden Längenbereiche 16 an den Stirnschenkeln 17 stirnseitig verbunden.

Durch die Falten- und Flanschausbildung weist der Querträger 2 eine crashoptimierte Form auf.

Im Querträger 2 sind an die Querschnittskonfiguration der Endabschnitte 18 der Pralldämpfer 3 angepasste taschenartige Aufnahmen 19 vorgesehen (siehe hierzu auch Figur 3). Diese weisen zur Oberseite 20 und zur Unterseite 21 der Pralldämpfer 3 parallele Längenabschnitte 22, 23 auf. Die Endabschnitte 18 der Pralldämpfer 3 tauchen in die Aufnahmen 19 ein und sind in diesen formschlüssig gehalten. Die oberen und unteren Längenabschnitte 22 bzw. 23 der Aufnahmen 19 gehen kontinuierlich mit einem etwa S-förmig verlaufenden Übergang 24 in die Schenkel 10 über.

Auch die Pralldämpfer 3 sind zweischalig aus entlang der Längskanten 25 ihrer Seitenschenkel 26 gefügten Oberschalen 27 und Unterschalen 28 gebildet. Die Pralldämpfer 3 weisen eine rechteckige Querschnittsgeometrie auf mit gerundeten Längsbereichen 29. Die horizontale Symmetrieachse S der Pralldämpfer 3 (siehe Figur 3) verläuft im Anbindungsbereich parallel zur horizontalen Mittellängsebene MLE (siehe Figur 4) des Querträgers 2. Diese Bauart zeichnet sich durch eine hohe Quersteifigkeit aus. Zum Querträger 2 hin ebenso wie zu den Längsträgern sind die Pralldämpfer 3 offen.

### Bezugszeichenaufstellung

- 1 -: Stoßfänger
- 2 -: Querträger
- 3 -: Pralldämpfer
- 4 -: Flanschplatte
- 5 -: Oberschale
- 6 -: Unterschale
- 7 -: obere Längskante
- 8 -: untere Längskante
- 9 -: frontseitiger Steg v. 2
- 10-: Schenkel
- 11 -: Längenabschnitt
- 12 -: Vertikalabschnitt
- 13 -: Versteifungsflansch
- 14 -: Übergang
- 15 -: Übergang
- 16 -: Längenbereich
- 17 -: Stirnschenkel
- 18 -: Endabschnitt
- 19-: Aufnahme
- 20 -: Oberseite v. 3
- 21 -: Unterseite v. 3
- 22 -: Längenabschnitt v. 2
- 23 -: Längenabschnitt v. 2
- 24 -: Übergang
- 25 -: Längskante
- 26 -: Seitenschenkel
- 27 -: Oberschale
- 28 -: Unterschale
- 29 -: Längsbereich v. 27 bzw. 28

- MLE -: Mittellängsebene
- S -: Symmetrieachse v. 3
- α -: Neigungswinkel

## Patentansprüche

1. Stoßfänger für ein Kraftfahrzeug mit einem unter Eingliederung von Pralldämpfern (3) quer zu den Längsträgern des Kraftfahrzeugrahmens fest-legbaren Querträger (2), der aus einer Oberschale (5) und einer Unterschale (6) gebildet ist, wobei sich an die obere Längskante (7) und an die untere Längskante (8) des frontseitigen Stegs (9) des Querträgers (2) jeweils ein nach hinten gerichteter Schenkel (10) anschließt, der einen Vertikalabschnitt (12) aufweist, **dadurch gekennzeichnet,dass** der Querträger (2) als zu den Pralldämpfern (3) hin offenes Profil gebildet ist und der schenkel (10) einen zum Rahmen abgewinkelten Versteifungsflansch (13) aufweist.

2. Stoßfänger nach Anspruch 1, **dadurch gekennzeichnet, dass** die Oberschale (5) und die Unterschale (6) bezogen auf die Mittellängsebene (MLE) des Querträgers (2) symmetrisch zueinander angeordnet sind.

3. Stoßfänger nach Anspruch 1 oder 2, **dadurch gekennzeichnet, dass** der Querträger (2) an die Querschnittskonfiguration der Endabschnitte (18) der Pralldämpfer (3) angepasste Aufnahmen (19) aufweist.

4. Stoßfänger nach Anspruch 3, **dadurch gekennzeichnet, dass** die Aufnahmen (19) durch partielle Aufweitungen an den Schenkeln (10) gebildet sind und zur Oberseite (20) sowie zur Unterseite (21) der Pralldämpfer (3) parallele Längenabschnitte (22, 23) aufweisen, welche mit einem kontinuierlichen Übergang (24) in die Längsschenkel (10) übergehen.

5. Stoßfänger nach einem der Ansprüche 1 bis 4, **dadurch gekennzeichnet, dass** die Pralldämpfer (3) des staßfängers (1) zweischalig ausgebildet sind.

## Claims

1. A motor vehicle bumper with a cross-member (2) which with the incorporation of impact dampers (3) is adapted to be fixed transversely of the motor vehicle frame longitudinal members, said cross-member (2) being formed from a top shell (5) and bottom shell (6), the top longitudinal edge (7) and the bottom longitudinal edge (8) of the front web (9) of the cross-member (2) each being adjoined by a rearwardly directed limb (10) which has a vertical portion (12), **characterised in that** the cross-member (2) is formed as a profile open towards the impact dampers (3) and the limb (10) comprises a stiffening flange (13) bent at an angle to the frame.

2. A bumper according to claim 1, **characterised in that** the top shell (5) and the bottom shell (6) are disposed symmetrically in relation to one another with respect to the central longitudinal plane (MLE) of the cross-member (2).

3. A bumper according to claim 1 or 2, **characterised in that** the cross-member (2) has sockets (19) adapted to the cross-sectional configuration of the end portions (18) of the impact dampers (3).

4. A bumper according to claim 3, **characterised in that** the sockets (19) are formed by partially widened portions at the limbs (10) and have longitudinal portions (22, 23) which are parallel both to the top (20) and to the underside (21) of the impact dampers (3) and which merge into the longitudinal limbs (10) with a continuous transition (24).

5. A bumper according to any one of claims 1 to 4, **characterised in that** the impact dampers (3) of the bumper (1) are of dual shell construction.

## Revendications

1. Pare-chocs pour un véhicule automobile, comportant un support transversal (2) qui est susceptible d'être immobilisé transversalement aux supports longitudinaux du châssis de véhicule automobile avec intégration d'amortisseurs d'impact (3) et qui est constitué d'une coque supérieure (5) et d'une coque inférieure (6), une branche respective (10) dirigée vers l'arrière se raccordant à l'arête longitudinale supérieure (7) et à l'arête longitudinale inférieure (8) de la barrette frontale (9) du support transversal (2), branche qui comprend un tronçon vertical (12), **caractérisé en ce que** le support transversal (2) est réalisé sous forme de profil ouvert vers les amortisseurs d'impact (3) et **en ce que** la branche (10) comprend une bride de rigidification (13) coudée par rapport au châssis.

2. Pare-chocs selon la revendication 1, **caractérisé en ce que** la coque supérieure (5) et la coque inférieure (6) sont agencées à symétrie l'une de l'autre par rapport au plan longitudinal médian (MLE) du support transversal (2).

3. Pare-chocs selon l'une ou l'autre des revendications 1 et 2, **caractérisé en ce que** le support transversal (2) comprend des logements (19) adaptés à la configuration en section des tronçons d'extrémité (18) des amortisseurs d'impact (3).

4. Pare-chocs selon la revendication 3, **caractérisé en ce que** les logements (19) sont formés par des évasements partiels au niveau des branches (10) et comprennent des tronçons longitudinaux (22, 23) parallèles à la face supérieure (20) et à la face inférieure (21) des amortisseurs d'impacts (3), lesquels se transforment par une transition continue (24) dans les branches longitudinales (10).

5. Pare-chocs selon l'une des revendications 1 à 4, **caractérisé en ce que** les amortisseurs d'impacts (3) du pare-chocs (1) sont réalisés avec deux coques.
